# EUROPEAN PATENT APPLICATION

(11) **EP 4 772 409 A1**
(43) Date of publication of application: **08.07.2026**
(21) Application number: 24857927.8
(22) Date of filing: 06.06.2024
(51) Int. Cl.: B60R 21/231

(54) **FRONT PASSENGER AIRBAG AND VEHICLE**

(30) Priority: 30.08.2023 CN 202322356221 U
(71) Applicant: Autoliv Development AB, 44783 Vargarda (SE)
(72) Inventor: MENG, Qiang, Shanghai 201807 (CN); GONG, Yanghao, Shanghai 201807 (CN); WANG, Ting, Shanghai 201807 (CN)
(74) Representative: Feucker, Max Martin
(86) International application number: PCT/CN2024/097743
(87) International publication number: WO 2025/044382

(57) **Abstract**

A front passenger airbag, comprising an airbag body (10). The airbag body (10) comprises: a first cut piece (11), a second cut piece (12), and a middle cut piece (13), provided with a first end (131) and a second end (132) along a travel direction of a vehicle, and provided with a first side (133) and a second side (134) along a direction transverse to the travel direction of the vehicle, wherein side edges of the first side (133) and the second side (134) of the middle cut piece (13) are sewn and connected along peripheral edges of the first cut piece (11) and the second cut piece (12), respectively; the length of each of the peripheral edges of the first cut piece (11) and the second cut piece (12) is greater than the length of each of the side edges of the first side (133) and the second side (134) of the middle cut piece (13), so as to form an empty peripheral edge (14) that is not sewn and connected to the side edge of the middle cut piece (13), and as the first end (131) and the second end (132) of the middle cut piece (13) are sewn, the empty peripheral edge (14) is folded in half and then sewn to form a pointed side ear portion (15). A vehicle, which has the front passenger airbag. With this arrangement, pointed side ear portions are formed through cutting shapes and sewing manners of the first cut piece, the second cut piece and the middle cut piece, and an internal tether or an external tether does not need to be provided, thereby reducing manufacturing costs.

## Description

### TECHNICAL FIELD

The present disclosure relates to the technical field of safety, and in particular, to a front passenger airbag and a vehicle.

### BACKGROUND ART

In the related art, for a front passenger airbag of a vehicle, the front passenger airbag is installed in the dashboard in front of the front passenger seat in a travel direction of the vehicle; for example, it may be installed above a glove box of the dashboard, and below a styling surface of the dashboard.

A front passenger airbag in an autonomous land vehicle (ALV) includes a side support structure to protect both sides of the head of a front passenger from crash. In the related art, the side support structure of the front passenger airbag often needs to be formed by sewing special airbag cut pieces or by pulling a tether.

Since dashboards of various vehicle models are designed differently, when an airbag cut piece is cut, the shape of the cut piece results in very low utilization of a single piece of raw material, leading to high costs. In addition, to achieve better performance, for example, to enable the airbag to be more stable when deployed, the tether in the airbag cannot be eliminated, which also increases costs.

### SUMMARY OF THE INVENTION

To overcome the problems existing in the related art, the present disclosure provides a front passenger airbag and a vehicle.

According to a first aspect of embodiments of the present disclosure, the present disclosure provides a front passenger airbag, comprising an airbag body. The airbag body comprises: a first cut piece; a second cut piece; and a middle cut piece, provided with a first end and a second end along a travel direction of a vehicle, and provided with a first side and a second side along a direction transverse to the travel direction of the vehicle, wherein side edges of the first side and the second side of the middle cut piece are respectively sewn and connected along peripheral edges of the first cut piece and the second cut piece, the length of each of the peripheral edges of the first cut piece and the second cut piece is greater than the length of each of the side edges of the first side and the second side of the middle cut piece to form an empty peripheral edge that is not sewn and connected to the side edge of the middle cut piece, and as the first end and the second end of the middle cut piece are sewn, the empty peripheral edge is folded in half and then sewn to form a pointed side ear portion.

In some embodiments, the first cut piece and the second cut piece have the same shape.

In some embodiments, after the airbag body is inflated and deployed, the middle cut piece forms a rear side surface in contact with a front passenger, and the side ear portion is located on the rear side surface and, together with the rear side surface, forms a head and neck protection area for the front passenger, wherein the side ear portion extends obliquely toward the rear of the front passenger, and an included angle between the side ear portion and the rear side surface is an obtuse angle.

In some embodiments, the first cut piece and the second cut piece each comprise a protruding portion, wherein the protruding portion comprises an upper peripheral edge, a lower peripheral edge, and the empty peripheral edge located between the upper peripheral edge and the lower peripheral edge, and after the first end and the second end of the middle cut piece are sewn and connected, the upper peripheral edge and the lower peripheral edge are aligned, so that the side ear portion extends obliquely toward the rear of a driver.

In some embodiments, the first cut piece and the second cut piece further comprise a recessed corner, wherein the recessed corner is recessed from a middle portion of the empty peripheral edge along the travel direction of the vehicle, and when the empty peripheral edge is folded and sewn to form the side ear portion, the recessed corner reduces sharpness of the side ear portion.

In some embodiments, after the airbag main body is inflated and deployed, the middle cut piece further forms: a front side surface, configured to abut against the windshield of the vehicle; and a lower side surface, configured to abut against a display screen on the dashboard of the vehicle.

In some embodiments, the first cut piece and the second cut piece each comprise a recessed groove, wherein after the middle cut piece is sewn and connected to the first cut piece and the second cut piece, the lower side surface of the middle cut piece forms a recessed portion adapted to the display screen.

In some embodiments, the front passenger airbag further comprises a gas generator, used to inflate the airbag, wherein the gas generator is located below the dashboard of the vehicle and in front of the display screen.

In some embodiments, the first cut piece and/or the second cut piece is provided with a vent hole.

According to a second aspect of embodiments of the present disclosure, the present disclosure provides a vehicle, comprising the front passenger airbag according to the first aspect.

The technical solutions provided in the embodiments of the present disclosure may achieve the following beneficial effects: the pointed side ear portions are formed by means of cutting shapes and sewing manners of the first cut piece, the second cut piece, and the middle cut piece, which not only enables high utilization of a raw material of the cut pieces, but also reduces manufacturing costs of the airbag; in addition, since the pointed side ear portions are formed, an internal tether/external tether may not need to be provided, while still ensuring stability of the airbag during deployment, and further reducing manufacturing costs and process costs of the airbag.

### BRIEF DESCRIPTION OF THE DRAWINGS

The accompanying drawings, which are incorporated in and constitute a part of the present specification, illustrate embodiments consistent with the present disclosure, and are used to explain the principles of the present disclosure together with the specification.
FIG. 1 is an exploded schematic diagram of a middle cut piece, a first cut piece, and a second cut piece of a front passenger airbag according to an exemplary embodiment;
FIG. 2 is a schematic diagram of a three-dimensional structure after a first cut piece, a second cut piece, and a middle cut piece are sewn and connected, and when a first end and a second end of the middle cut piece are not sewn and connected;

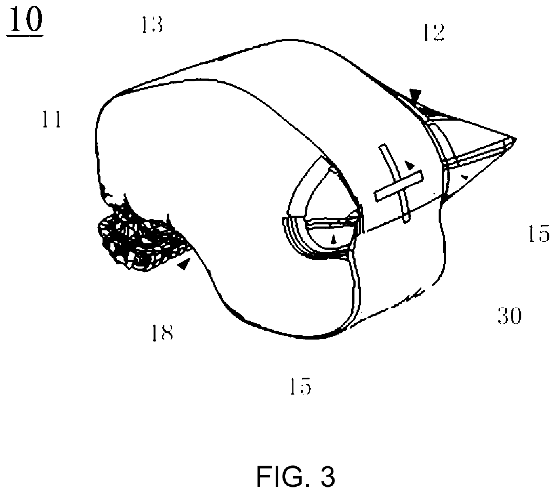

FIG. 3 is a schematic diagram of a three-dimensional structure of an airbag main body after the first end and the second end of the middle cut piece in FIG. 2 are sewn and connected;
FIG. 4 is a schematic diagram of a position relationship between the airbag in FIG. 3 after inflation and deployment, a windshield, and a display screen; and
FIG. 5 is a schematic diagram of a position relationship between the airbag in FIG. 3 after inflation and deployment, a windshield, and a display screen from another angle.

### DETAILED DESCRIPTION OF PREFERRED EMBODIMENTS

Exemplary embodiments are described in detail herein, and examples of the exemplary embodiments are presented in the accompanying drawings. When the following description refers to the accompanying drawings, unless otherwise specified, the same numerals in different accompanying drawings represent the same or similar elements. The implementations described in the following exemplary embodiments are not representative of all implementations consistent with the present disclosure. Instead, the implementations are merely examples of apparatuses and methods consistent with some aspects of the present disclosure as recited in the appended claims.

To resolve the above technical problem, the present disclosure provides a front passenger airbag 100, which provides protection for a passenger located on a front passenger side of a vehicle.

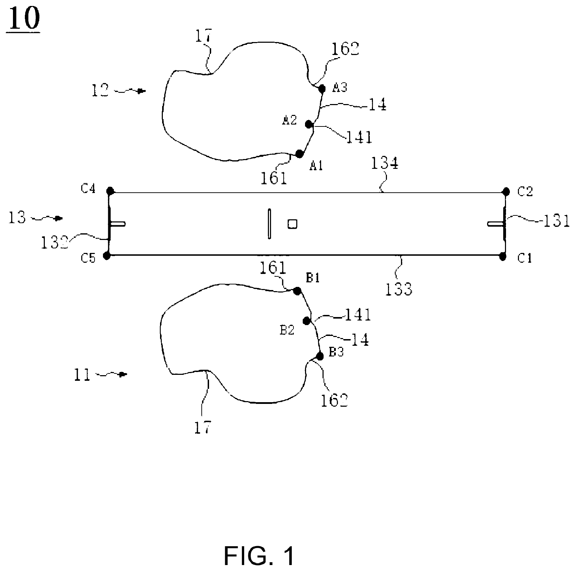

As shown in FIG. 1, the front passenger airbag 100 may comprise an airbag body 10 and a gas generator 20. The gas generator 20 is connected to the airbag body 10, and is used to rapidly inflate the airbag body 10 when a vehicle crash occurs.

The airbag body 10 comprises a first cut piece 11, a second cut piece 12, and a middle cut piece 13.

The middle cut piece 13 has a rectangular shape in a flattened state. The middle cut piece 13 comprises a first end 131 and a second end 132 along the length direction, and comprises a first side 133 and a second side 134 along the width direction. After the airbag body 10 is inflated and deployed, the middle cut piece 13 is arranged along a travel direction of the vehicle, and the first cut piece 11 and the second cut piece 12 are located on two sides of the middle cut piece 13, respectively, in a direction transverse to the travel direction of the vehicle.

As shown in FIG. 1, when the middle cut piece 13 is sewn and connected to the first cut piece 11 and the second cut piece 12, a side edge of the first side 133 and a side edge of the second side 134 of the middle cut piece 13 are sewn and connected along peripheral edges of the first cut piece 11 and the second cut piece 12, respectively.

As shown in FIG. 1, when the middle cut piece 13 is sewn and connected to the first cut piece 11 and the second cut piece 12, a point C1 and a point C5 of the middle cut piece 13 are aligned with a point B1 and a point B3 of the first cut piece 11, respectively. Similarly, a point C2 and a point C4 of the middle cut piece 13 are aligned with a point A1 and a point A3 of the second cut piece 12, respectively.

Further, the length of each of the peripheral edges of the first cut piece 11 and the second cut piece 12 is greater than the length of each of the side edges of the first side 133 and the second side 134 of the middle cut piece 13, so as to form an empty peripheral edge 14 that is not sewn and connected to the side edge of the middle cut piece 13.

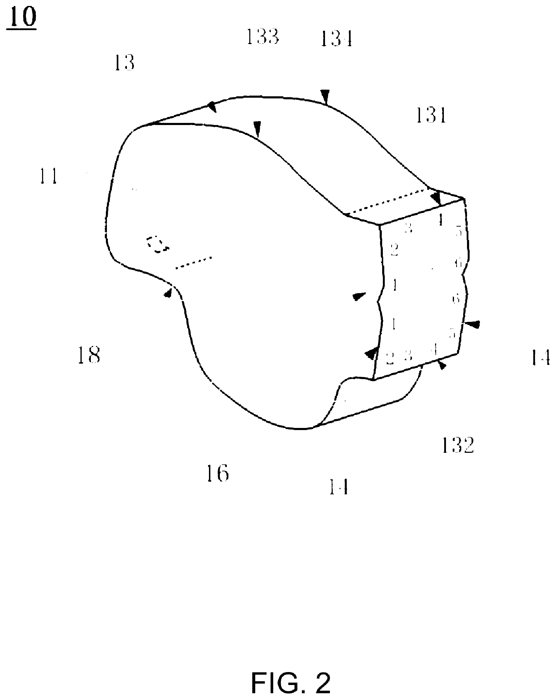

As shown in FIG. 2, the first end 131 and the second end 132 of the middle cut piece 13 are disposed opposite to each other along an up-down direction to form a pre-sewn state, and as the first end 131 and the second end 132 of the middle cut piece 13 are sewn, the empty peripheral edge 14 is folded in half and then sewn to form a pointed side ear portion 15. The up-down direction is based on a direction shown in FIG. 2, and is not used to limit a specific direction of the middle cut piece 13.

Specifically, when the first end 131 and the second end 132 of the middle cut piece 13 gradually approach each other, the respective empty peripheral edges 14 of the first cut piece 11 and the second cut piece 12 bulge or extend away from the middle cut piece 13 in the direction transverse to the travel direction of the vehicle, so that the empty peripheral edge 14 of the first cut piece 11 is folded up and down about a point B2, the empty peripheral edge 14 of the second cut piece 12 is folded up and down about a point A2, then the point B1 and the point B3 of the first cut piece 11 gradually approach each other, and the point A1 and the point A3 of the second cut piece 12 also gradually approach each other.

After the first end 131 and the second end 132 of the middle cut piece 13 are sewn and connected to form a sewing line, the point B1 and the point B3 of the first cut piece 11 coincide, and a segment B1 B2 and a segment B3B2 of the empty peripheral edge 14 of the first cut piece 11 coincide and are sewn. Meanwhile, the point A1 and the point A3 of the second cut piece 12 also coincide, and a segment A1A2 and a segment A3A2 of the empty peripheral edge 14 of the second cut piece 12 also coincide and are sewn. In this way, the empty peripheral edges 14 of the first cut piece 11 and the second cut piece 12 each form pointed side ear portions 15 with the middle cut piece 13.

The sewing line formed by sewing and connecting the first end 131 and the second end 132 of the middle cut piece 13 is connected to a sewing line formed by sewing and connecting the empty peripheral edge 14 of the first cut piece 11 and a sewing line formed by sewing and connecting the half-folded empty peripheral edge 14 of the second cut piece 12, to form a line. When the airbag body 10 is inflated and deployed, the sewing line can play a role in stabilizing the side ear portion 15, a tether in the prior art is omitted, and material costs and process costs are reduced.

It can be learned that the pointed side ear portions 15 are formed by means of cutting shapes and sewing manners of the first cut piece 11, the second cut piece 12, and the middle cut piece 13, which not only enables high utilization of a raw material of the cut piece but also reduces material costs and process costs of the airbag. In addition, since the pointed side ear portions 15 are formed, an internal tether/external tether may not need to be provided, while still ensuring stability of the airbag during deployment, further reducing manufacturing costs and process costs of the airbag.

In some embodiments, after the airbag body 10 is inflated and deployed, the middle cut piece 13 forms a rear side surface 30 in contact with a front passenger, and the side ear portion 15 is located on the rear side surface 30 and, together with the rear side surface 30, forms a head and neck protection area for the front passenger, wherein the side ear portion 15 extends obliquely toward the rear of the front passenger, and an included angle between the side ear portion 15 and the rear side surface 30 is an obtuse angle.

An included angle between the sewing line formed by sewing and connecting the first end 131 and the second end 132 of the middle cut piece 13 and the sewing line formed by sewing and connecting the empty peripheral edge 14 of the first cut piece 11 or an included angle between the sewing line formed by sewing and connecting the first end 131 and the second end 132 of the middle cut piece 13 and the sewing line formed by sewing and connecting the half-folded empty peripheral edge 14 of the second cut piece 12, is an obtuse angle. Therefore, when viewed from top to bottom, the formed head and neck protection area is substantially in a trapezoidal shape, so as to ensure that the airbag body 10 can accommodate the head of the front passenger after being inflated and deployed.

Further, when the first end 131 and the second end 132 of the middle cut piece 13 are sewn and connected, two alignment points may be disposed on the first end 131 and the second end 132, respectively to facilitate alignment and pre-sewing, thereby improving the speed and efficiency of sewing. As shown in FIG. 2, markings 3 and 4 corresponding to the first end 131 are aligned, sewn, and connected to markings 3 and 4 corresponding to the second end 132, respectively. Similarly, the empty peripheral edge 14 of the first cut piece 11 and the empty peripheral edge 14 of the second cut piece 12 are also each provided with two alignment points, so as to facilitate alignment and pre-sewing. As shown in FIG. 2, two markings 1 of the empty peripheral edge 14 of the first cut piece 11 are aligned and sewn, two markings 2 are aligned and sewn, two markings 5 of the empty peripheral edge 14 of the second cut piece 12 are aligned and sewn, and two markings 6 are aligned and sewn.

In some embodiments, the first cut piece 11 and the second cut piece 12 have the same shape. Therefore, after the airbag body 10 is inflated and deployed and the side ear portion 15 is excluded, the airbag body 10 is substantially of a triangular prism structure. The first cut piece 11 and the second cut piece 12 having the same shape not only provides high interchangeability and saves cutting mold costs, but also enables a plurality of sheets of overlapping raw material to be simultaneously cut into a plurality of first cut pieces 11 or second cut pieces 12.

In addition, the first cut piece 11, the second cut piece 12, and the middle cut piece 13 may be made of a same material, or the first cut piece 11 and the second cut piece 12 are made of a same material, and the middle cut piece 13 is made of another material, which is not specifically limited herein.

In some embodiments, the first cut piece 11 and the second cut piece 12 each include a protruding portion 16. The protruding portion 16 includes an upper peripheral edge 161, a lower peripheral edge 162, and the empty peripheral edge 14 located between the upper peripheral edge 161 and the lower peripheral edge 162. After the first end 131 and the second end 132 of the middle cut piece 13 are sewn and connected, the upper peripheral edge 161 and the lower peripheral edge 162 are aligned, so that the side ear portion 15 extends obliquely toward the rear of a driver. The upper peripheral edge 161 and the lower peripheral edge 162 are based on an upper peripheral edge 161 and a lower peripheral edge 162 shown in FIG. 2, and are not intended to limit a specific direction of the protrusion.

Specifically, the upper peripheral edge 161 and the lower peripheral edge 162 of the protruding portion 16 are substantially parallel, and an end portion of the protruding portion 16 is the empty peripheral edge 14. When the first end 131 and the second end 132 of the middle cut piece 13 are sewn and connected, the upper peripheral edge 161 and the lower peripheral edge 162 may be aligned up and down, so that after the airbag body 10 is inflated, the rear side surface 30 formed by the middle cut piece 13 can be flatter, thereby reducing impact on the face of the front passenger.

In addition, the upper peripheral edge 161 and the lower peripheral edge 162 also help the formed side ear portion 15 extend obliquely toward the rear of the head of the front passenger, so as to ensure that the head and neck protection area is in a trapezoidal shape.

In some embodiments, the first cut piece 11 and the second cut piece 12 further include a recessed corner 141, the recessed corner 141 being located in a middle portion of the empty peripheral edge 14 and is recessed from the empty peripheral edge 14 along the travel direction of the vehicle.

When the empty peripheral edge 14 is folded and sewn to form the side ear portion 15, the empty peripheral edge 14 is excessively sharp at a folded position. The recessed corner 141 can prevent the cut piece from reducing sharpness of the side ear portion 15 at the recessed corner 141. In addition, the recessed corner 141 may facilitate sewing of the empty peripheral edge 14 at the folded position.

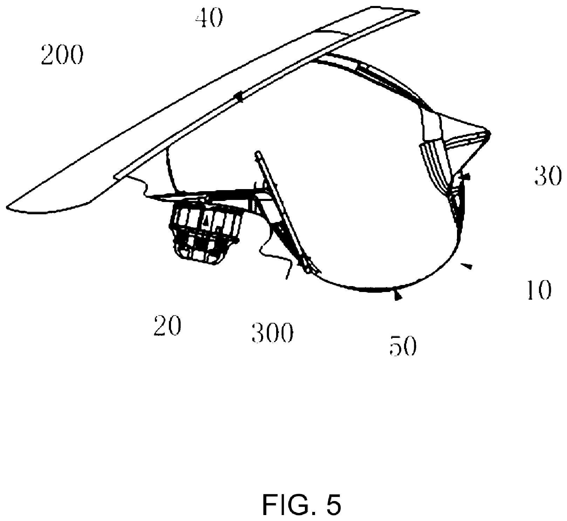

In some embodiments, after the airbag main body is inflated and deployed, as shown in FIG. 5, the middle cut piece 13 further forms a front side surface 40 and a lower side surface 50. The front side surface 40 is configured to abut against a windshield 200 of the vehicle. The lower side surface 50 is configured to abut against a display screen 300 on the dashboard of the vehicle.

The front side surface 40 and the lower side surface 50 are attached to a fastening apparatus in the vehicle, so that when the airbag body 10 is inflated and deployed, a position of the airbag body 10 can be relatively fixed, thereby stabilizing the airbag.

In some embodiments, the first cut piece 11 and the second cut piece 12 each include a recessed groove 17. After the middle cut piece 13 is sewn and connected to the first cut piece 11 and the second cut piece 12, the lower side surface 50 of the middle cut piece 13 forms a recessed portion 18 adapted to the display screen 300.

Therefore, after the first cut piece 11, the second cut piece 12, and the middle cut piece 13 are sewn and connected to form the airbag body 10, and the airbag body 10 is inflated and expanded, as shown in FIG. 5, the airbag body 10 has a substantially Z-shaped columnar structure. The recessed portion 18 can avoid the display screen 300, to prevent crushing of the display screen 300.

In some embodiments, the first cut piece 11 and/or the second cut piece 12 is provided with a vent hole (not shown in the figure). Thus, the airbag body 10 can promptly vent internal gas after being inflated and deployed, thereby preventing the airbag body 10 from being inflated and colliding too quickly and too forcefully and causing injury to the front passenger.

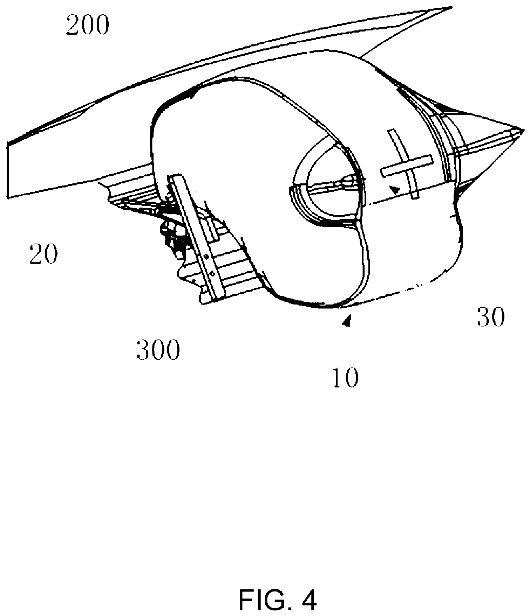

Based on the same inventive concept, the present disclosure provides a vehicle, as shown in FIG. 4 and FIG. 5, the vehicle at least comprising a windshield 200, a dashboard, a display screen 300 (which may also be referred to as a central control screen), and the front passenger airbag 100 described above. The vehicle may be a compact car, a bus, a truck, or the like, particularly an autonomous vehicle, such as an autonomous land vehicle.

The display screen 300 may be a floating central control screen. With the development of vehicle technology, more and more functions tend to be integrated on the display screen 300. The display screen 300 may be disposed substantially in a middle portion of the dashboard in the transverse direction, to facilitate operation and viewing by the driver. Due to trends in electric vehicles and future intelligent driving, in order to exhibit high technology and provide an entertaining atmosphere, and to meet needs of a user for operation of the display screen 300, the display screen 300 may be made larger; for example, the display screen 300 may be suspended above a styling surface of the dashboard, and extend to the front passenger side as much as possible. Such a display screen 300 can not only provide assistance for the driver, but also provide entertainment facilities or other assistance for the front passenger.

The gas generator 20 of the airbag is mounted inside the dashboard, and the gas generator 20 is located below the dashboard of the vehicle and in front of the display screen 300. The gas generator 20 is connected to the airbag and is used to rapidly inflate the airbag in the event of a vehicle crash.

The airbag body 10 of the airbag may bypass the display screen 300 when being inflated, so as to prevent an impact force generated by rapid inflation of the airbag body 10 from breaking the display screen 300. After the airbag body 10 is inflated and deployed, the front side surface 40101 is configured to be in contact with the windshield 20010, the rear side surface 30 and the side ear portion 15 of the airbag body 10 are configured to be in contact with the front passenger to provide normal protection for the front passenger, and the lower side surface 50 of the airbag body 10 is configured to be in contact with the dashboard. The recessed portion 18 of the airbag body 10 can avoid the display screen 300 to prevent crushing of the display screen 300.

The specific manner of the functions implemented in the foregoing embodiment has been described in detail in the embodiment related to the front passenger airbag 100, and details are not described here.

It can be understood that in the present disclosure, "a plurality of" means two or more, and other quantifiers are similar. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. The singular forms "a" and "the" are also intended to include plural forms, unless otherwise specified in the context clearly.

It may be further understood that the terms "first", "second", etc. are used to describe various structures, but these structures should not be limited by these terms. These terms are only used to distinguish between structures of the same type, and do not indicate a particular order or degree of importance. In practice, the terms "first", "second", etc. are used interchangeably. For example, without departing from the scope of the present disclosure, a first structure may also be referred to as a second structure, and similarly, a second structure may also be referred to as a first structure.

It can be further understood that an orientation or positional relationship indicated by terms such as "center", "longitudinal", "lateral", "front", "back", "up", "down", "left", "right", "vertical", "horizontal", "top", "bottom", "inside", and "outside" is based on the orientation or positional relationship shown in the accompanying drawings, and is only for the convenience of describing the embodiments and simplifying the description, rather than indicating or implying that an apparatus or an element indicated must have a particular orientation, or be constructed and operated in a particular orientation.

A person skilled in the art can easily figure out other implementations of the present disclosure after thinking over the specification and practicing the invention disclosed herein. The present application is intended to cover any variations, uses, or adaptive changes of the present disclosure, and these variations, uses, or adaptive changes follow the general principles of the present disclosure and include common knowledge or conventional technical means in the technical field that are not disclosed in the present disclosure. The specification and the embodiments are to be regarded as exemplary only, and the actual scope and spirit of the present disclosure are pointed out by the following claims.

It should be understood that the present disclosure is not limited to the precise structures that have been described above and shown in the accompanying drawings, and various modifications and changes can be made without departing from the scope of the present disclosure. The scope of the present disclosure is limited by the appended claims only.

## Claims

1. A front passenger airbag (100), **characterized by** comprising an airbag body (10), wherein the airbag body (10) comprises:
a first cut piece (11);
a second cut piece (12); and
a middle cut piece (13), provided with a first end (131) and a second end (132) along a travel direction of a vehicle, and provided with a first side (133) and a second side (134) along a direction transverse to the travel direction of the vehicle, wherein side edges of the first side (133) and the second side (134) of the middle cut piece (13) are sewn and connected along peripheral edges of the first cut piece (11) and the second cut piece (12), respectively,
the length of each of the peripheral edges of the first cut piece (11) and the second cut piece (12) is greater than the length of each of the side edges of the first side (133) and the second side (134) of the middle cut piece (13), so as to form an empty peripheral edge (14) that is not sewn and connected to the side edge of the middle cut piece (13), and as the first end (131) and the second end (132) of the middle cut piece (13) are sewn, the empty peripheral edge (14) is folded in half and then sewn to form a pointed side ear portion (15).

2. The front passenger airbag (100) according to claim 1, wherein the first cut piece (11) and the second cut piece (12) have a same shape.

3. The front passenger airbag (100) according to claim 1, wherein
after the airbag body (10) is inflated and deployed, the middle cut piece (13) forms a rear side surface (30) in contact with a front passenger, the side ear portion (15) is located on the rear side surface (30) and, together with the rear side surface (30), forms a head and neck protection area for the front passenger, the side ear portion (15) extending obliquely toward the rear of the front passenger, and an included angle between the side ear portion (15) and the rear side surface (30) being an obtuse angle.

4. The front passenger airbag (100) according to claim 1, wherein
the first cut piece (11) and the second cut piece (12) each comprise a protruding portion (16), wherein the protruding portion (16) comprises an upper peripheral edge (161), a lower peripheral edge (162), and the empty peripheral edge (14) located between the upper peripheral edge (161) and the lower peripheral edge (162), and after the first end (131) and the second end (132) of the middle cut piece (13) are sewn and connected, the upper peripheral edge (161) and the lower peripheral edge (162) are aligned, so that the side ear portion (15) extends obliquely toward the rear of a driver.

5. The front passenger airbag (100) according to claim 1, wherein
the first cut piece (11) and the second cut piece (12) further comprise a recessed corner (141), wherein the recessed corner (141) is recessed from a middle portion of the empty peripheral edge (14) along the travel direction of the vehicle, and when the empty peripheral edge (14) is folded and sewn to form the side ear portion (15), the recessed corner (141) reduces sharpness of the side ear portion (15).

6. The front passenger airbag (100) according to claim 3, wherein
after the airbag body (10) is inflated and deployed, the middle cut piece (13) further forms:
a front side surface (40), configured to abut against a windshield (200) of the vehicle; and
a lower side surface (50), configured to abut against a display screen (300) on the dashboard of the vehicle.

7. The front passenger airbag (100) according to claim 6, wherein
the first cut piece (11) and the second cut piece (12) each comprise a recessed groove (17), wherein after the middle cut piece (13) is sewn and connected to the first cut piece (11) and the second cut piece (12), the lower side surface (50) of the middle cut piece (13) forms a recessed portion (18) adapted to the display screen (300).

8. The front passenger airbag (100) according to claim 6, wherein
the front passenger airbag (100) further comprises a gas generator (20), used to inflate the front passenger airbag (100), wherein the gas generator (20) is located below the dashboard of the vehicle and in front of the display screen (300).

9. The front passenger airbag (100) according to claim 1, wherein
the first cut piece (11) and/or the second cut piece (12) is provided with a vent hole.

10. A vehicle, **characterized by** comprising the front passenger airbag (100) according to any one of claims 1 to 9.
